# FASCICULE DE BREVET EUROPEEN

(11) **EP 3 469 206 B1**
(45) Date de publication et mention de la délivrance du brevet: **29.04.2020**
(21) Numéro de dépôt: 17735193.9
(22) Date de dépôt: 08.06.2017
(51) Int. Cl.: F02K 9/64, F02K 9/97, B23P 15/00

(54) **CHAMBRE DE COMBUSTION DE MOTEUR FUSEE AVEC AILETTES A COMPOSITION VARIABLE**
RAKETENTRIEBWERKBRENNKAMMER MIT RIPPEN MIT VARIABLER ZUSAMMENSETZUNG
ROCKET MOTOR COMBUSTION CHAMBER HAVING VARIABLE-COMPOSITION FINS

(30) Priorité: 13.06.2016 FR 1655412
(43) Date de publication de la demande: 17.04.2019
(73) Titulaire: ARIANEGROUP SAS, 75015 Paris (FR); Centre National d'Etudes Spatiales, 75001 Paris (FR)
(72) Inventeur: GUICHARD, Didier, 27120 Menilles (FR)
(74) Mandataire: Cabinet Beau de Loménie
(86) Numéro de dépôt international: PCT/FR2017/051442
(87) Numéro de publication internationale: WO 2017/216450

(56) Documents cités:
- WO-A1-00/20749
- WO-A1-2007/030038
- WO-A1-2008/076007

## Description

La présente invention concerne une chambre de combustion de moteur fusée s'étendant selon un axe longitudinal A et comprenant une enveloppe longitudinale comportant une paroi interne longitudinale en un premier alliage qui est un alliage de cuivre et qui se prolonge sur sa face radialement externe par une pluralité d'ailettes s'étendant radialement vers l'extérieur, chacune de ces ailettes présentant une partie proximale, une partie médiane, et une partie distale, et comportant une coque externe entourant cette paroi interne longitudinale et ces ailettes, cette coque externe étant réalisée en un troisième alliage distinct du premier alliage.

Dans la description qui suit, les termes "interne" et "externe" indiquent une partie située radialement à, ou orientée radialement vers, l'intérieur ou l'extérieur respectivement par rapport à l'axe longitudinal de la chambre de combustion.

Dans un moteur fusée, l'enveloppe de la chambre de combustion comporte une paroi longitudinale qui s'étend longitudinalement selon un axe longitudinal A, cet axe longitudinal A étant sensiblement l'axe de révolution de cette chambre de combustion. Cette paroi longitudinale de la chambre présente sur sa face externe des ailettes qui prolongent radialement vers l'extérieur cette paroi longitudinale et qui s'étendent le long de cette paroi. Une coque est destinée à entourer cette paroi longitudinale par l'extérieur en étant en contact avec les extrémités radialement externes (extrémités distales) des ailettes de façon à fermer les espaces entre ces ailettes. Ainsi, chaque espace entre deux ailettes adjacentes forme un canal qui n'est ouvert éventuellement qu'à ses extrémités longitudinales.

Ce réseau de canaux est destiné à recevoir un liquide de refroidissement, par exemple de l'hydrogène liquide, qui, en circulant dans ces canaux, refroidit la paroi longitudinale qui est soumise, sur sa face interne, à des températures élevées de par la combustion qui se produit dans la chambre de combustion.

Pour maximiser cet échange thermique au niveau de la paroi longitudinale, la paroi longitudinale et les ailettes sont réalisées en un alliage de cuivre.

Outre son rôle de fermeture des canaux, la coque permet d'assurer la tenue structurale de la chambre de combustion, l'alliage de cuivre de la paroi longitudinale présentant des caractéristiques mécaniques insuffisantes pour atteindre une résistance mécanique suffisante en fonctionnement. La coque est ainsi réalisée en un alliage plus résistant que le cuivre, par exemple un alliage à base de nickel ou de fer.

La fixation de cette coque sur les extrémités distales des ailettes pose cependant des difficultés liées à l'assemblage de deux matériaux aux propriétés sensiblement différentes. En effet, les alliages de cuivre utilisés sont non soudables ou difficilement soudables avec l'alliage de la coque longitudinale. Ainsi, il est impossible ou difficile de souder avec une tenue satisfaisante les ailettes et la coque.

On peut effectuer un brasage de la coque sur les ailettes, mais ce procédé est complexe (brasage dans une enceinte) et peu fiable (contraintes différentielles importantes entre l'alliage de cuivre et l'alliage de la coque).

On peut également fermer les canaux par dépôt électrolytique, ou par projection thermique ou par tout autre type de procédé de revêtement. Cependant il faut préalablement remplir les canaux puis, après fermeture, éliminer l'insert et garantir la non obstruction des canaux ; ceci conduit à des cycles de fabrication très longs avec de nombreuses opérations sources de défauts potentiels à la liaison. Le document WO 2007/030038 A1 décrit une chambre de combustion de moteur fusée selon l'art antérieur.

La présente invention vise à remédier à ces inconvénients.

L'invention vise à proposer une chambre de combustion de moteur fusée dont la paroi est en alliage de cuivre et dont les ailettes sont recouvertes par une coque de telle sorte que les espaces entre les ailettes forment des canaux, dont la fabrication est facilitée et qui présente une tenue mécanique satisfaisante.

Ce but est atteint grâce au fait que ladite partie proximale d'au moins une ailette, de préférence de chacune des ailettes, est réalisée en ledit premier alliage et ladite partie distale de ladite ailette est réalisée en un second alliage qui est un alliage distinct du premier alliage, ladite partie médiane de ladite ailette entre ladite partie proximale et ladite partie distale présentant une composition qui varie graduellement avec la distance radiale audit axe longitudinal A depuis 100% de premier alliage au niveau de l'interface entre ladite partie proximale et ladite partie médiane à 100% de second alliage au niveau de l'interface entre ladite partie médiane et ladite partie distale, ledit second alliage présentant une soudabilité avec ledit troisième alliage qui est supérieure à la soudabilité dudit premier alliage avec ce troisième alliage et/ou une résistance mécanique qui est supérieure à celle dudit premier alliage.

Grâce à ces dispositions, il est possible de réaliser un soudage de la coque externe sur les ailettes, et ainsi de faciliter la fabrication de la chambre de combustion. Alternativement, ou en complément, les ailettes présentent une résistance mécanique qui est supérieure à celle d'ailettes réalisées entièrement en alliage de cuivre.

L'invention concerne également un procédé de fabrication d'une chambre de combustion de moteur fusée.

Selon l'invention ce procédé comprend les étapes suivantes :
on réalise une ébauche en premier alliage comprenant une première portion incluant au moins la paroi interne longitudinale et une deuxième portion incluant au moins la partie proximale de chacune des ailettes,
on dépose sur au moins certaines zones de la surface radialement externe de la deuxième portion un matériau de façon à former une troisième portion incluant au moins la partie médiane de chacune desdites ailettes, la composition dudit matériau variant graduellement avec la distance radiale audit axe longitudinal A depuis 100% de premier alliage au niveau de l'interface entre ladite deuxième portion et ladite troisième portion à 100% d'un second alliage au niveau de l'extrémité radialement externe de ladite troisième portion, ce second alliage étant un alliage distinct dudit premier alliage,
on dépose dudit second alliage sur au moins certaines zones de la surface radialement externe de la troisième portion de façon à former une quatrième portion incluant au moins la partie distale de chacune desdites ailettes,
on entoure ladite quatrième portion avec ladite coque externe réalisée en troisième alliage, ledit second alliage présentant une soudabilité avec ledit troisième alliage qui est supérieure à la soudabilité dudit premier alliage avec ce troisième alliage et/ou une résistance mécanique qui est supérieure à celle dudit premier alliage.

L'invention sera bien comprise et ses avantages apparaîtront mieux, à la lecture de la description détaillée qui suit, d'un mode de réalisation représenté à titre d'exemple non limitatif. La description se réfère aux dessins annexés sur lesquels :
- la figure 1 est une coupe longitudinale d'une chambre propulsive de moteur fusée d'un moteur fusée comportant une chambre de combustion selon l'invention,
- la figure 2 est une coupe transversale de la chambre de combustion selon l'invention.

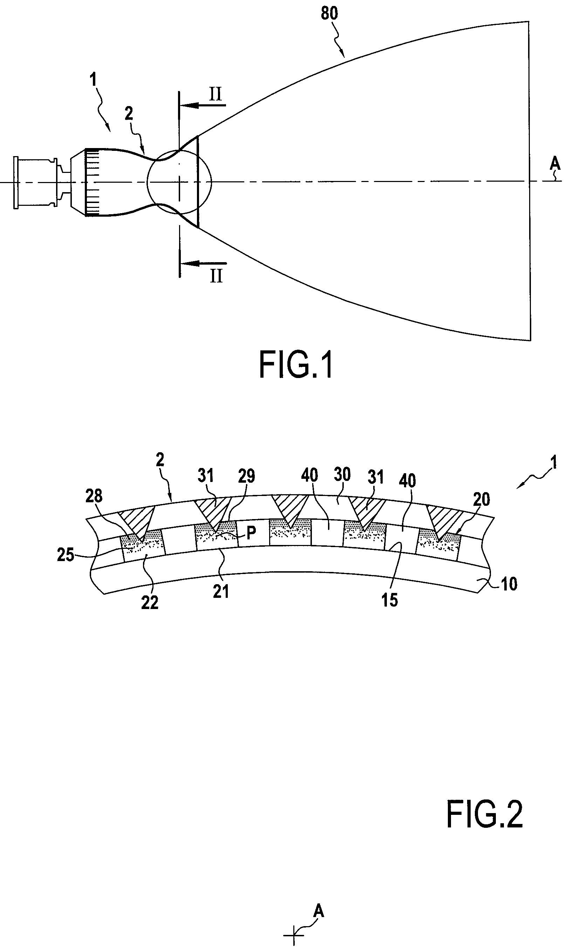

La figure 1 montre une chambre propulsive en coupe longitudinale. La chambre propulsive comporte une chambre de combustion 1 selon l'invention, et un divergent 80. La chambre de combustion 1 est de géométrie sensiblement annulaire, et s'étend selon un axe longitudinal A.

La chambre de combustion 1 est entourée par une enveloppe longitudinale 2 comportant une paroi longitudinale dont la totalité ou une partie est une paroi interne longitudinale 10. Cette paroi interne 10 est constituée d'un premier alliage qui est un alliage de cuivre.

Cette paroi interne 10 de la chambre de combustion 1 présente sur sa face externe 15 des ailettes 20 qui prolongent radialement vers l'extérieur cette paroi interne 10 et qui s'étendent le long de cette paroi interne 10, comme représenté en figure 2 qui est une coupe transversale de la chambre de combustion 1.

L'espace entre deux ailettes 20 adjacentes quelconques forme un canal 40 qui s'étend le long de la paroi. Chaque canal 40 est par exemple orienté selon la direction longitudinale (axe longitudinal A), ou est par exemple hélicoïdal autour de l'axe longitudinal A.

Chaque ailette 20 présente une section par exemple rectangulaire, et chaque canal 40 présente une section par exemple rectangulaire, comme représenté en figure 2. Alternativement, les ailettes 20 et les canaux 40 présentent une section d'une autre géométrie.

Par exemple, les ailettes 20 ont une hauteur constante, et identique d'une ailette 20 à l'autre.

Chacune des ailettes 20 présente ainsi une partie proximale 22, une partie médiane 25, et une partie distale 28. La partie proximale 22 est la partie la plus proche de la face externe 15 et de l'axe longitudinal A. La partie distale 28 est la partie la plus éloignée de l'axe longitudinal A, et comprend l'extrémité 29 radialement externe de l'ailette 20. La partie médiane 25 est située entre la partie proximale 22 et la partie distale 28.

Selon l'invention, la partie médiane 25 présente une composition qui varie graduellement avec la distance radiale à l'axe longitudinal A depuis 100% de premier alliage au niveau de l'interface entre la partie proximale 22 et la partie médiane 25 à 100% d'un second alliage au niveau de l'interface entre la partie médiane 25 et la partie distale 28, la partie distale 28 étant constituée de ce second alliage.

Par exemple, cette variation graduelle est linéaire en fonction de la distance à l'axe longitudinal A.

La partie médiane 25 d'une ailette 20 est située à une certaine distance de la base 21 de l'ailette 20, cette base 21 étant le lieu où la partie proximale 22 de l'ailette 20 rejoint la face externe 15 de la paroi interne 10. On définit cette distance comme la distance radiale séparant le milieu géométrique de la partie médiane 25 et la base 21.

Cette distance est constante tout le long de la longueur de l'ailette 20.

Cette distance est identique pour chacune des ailettes 20.

L'épaisseur (hauteur radiale) de chaque partie médiane 25 est constante tout le long de la longueur de l'ailette 20 et est identique pour chacune des ailettes 20. Alternativement, cette épaisseur de la partie médiane (25) à composition évolutive est évolutive longitudinalement, de façon à être adaptée localement aux sollicitations thermomécanique qui varient avec la position longitudinale au sein de la chambre de combustion.

Le second alliage est un alliage qui est distinct du premier alliage. Le second alliage est par exemple un alliage qui est autre qu'un alliage de cuivre.

La chambre de combustion 1 comprend également une coque externe 30 qui entoure la paroi interne longitudinale 10 et les ailettes 20 (figure 2). La coque 30 est annulaire, et est située radialement à l'extérieur des ailettes 20. La coque 30 est réalisée en un troisième alliage qui est distinct du premier alliage.

Selon une première variante de l'invention, le second alliage présente une soudabilité avec le troisième alliage qui est supérieure à la soudabilité du premier alliage avec ce troisième alliage.

Ainsi, il est possible de souder sans difficultés la coque 30 avec les extrémités distales 29 des ailettes 20. Dans le cas où la coque 30 est soudée sur les ailettes 20 la résistance mécanique de la chambre de combustion 1 est supérieure comparé au cas où la coque 30 n'est pas soudée sur les ailettes 20, notamment dans le cas où la liaison était réalisée par l'adhérence du dépôt électrolytique en sommet d'ailettes. Chaque canal 40 est ainsi un canal fermé. Chaque espace entre deux ailettes 20 adjacentes quelconque forme ainsi un canal 40 fermé. On entend par canal fermé un canal qui n'est éventuellement ouvert qu'à ses extrémités, et dont la paroi latérale est continue.

Selon l'autre variante de l'invention, la résistance mécanique du deuxième alliage est supérieure à celle du premier alliage. Ainsi, la rigidité de la chambre de combustion 1 est augmentée par rapport au cas où les ailettes 20 sont constituée entièrement du premier alliage.

Dans ce cas, la coque 30 peut ne pas être fixée sur les extrémités distales 29. Ainsi, il existe un espace entre les extrémités 29 des parties distales 28 des ailettes 20 et la coque 30 de telle sorte que les espaces entre les ailettes 20 forment des canaux 40 ouverts.

Par exemple, la coque 30 est fixée sur un composant de la chambre de combustion 1 à au moins une de ses extrémités longitudinales.

Par exemple la coque 30 est fixée sur un composant de la chambre de combustion 1 à ses deux extrémités longitudinales, c'est-à-dire à son extrémité amont et à son extrémité aval.

Selon l'invention, le deuxième alliage peut à la fois présenter une soudabilité avec le troisième alliage qui est supérieure à la soudabilité du premier alliage avec ce troisième alliage, et présenter une résistance mécanique qui est supérieure à celle du premier alliage.

Par exemple, ce second alliage est un alliage de nickel.

Avantageusement, le troisième alliage et le second alliage sont identiques, ce qui permet une meilleure soudabilité entre ces deux alliages.

Avantageusement, pour chacune des ailettes 20, la distance radiale de la partie médiane 25 à la base 21 de l'ailette 20 dans un plan transversal P de cette ailette 20 varie en fonction de la position longitudinale de ce plan P le long de la chambre de combustion.

Dans ce cas, par exemple, l'épaisseur (hauteur radiale) de chaque partie médiane 25 reste constante avec la position longitudinale du plan P.

Par exemple, cette distance radiale diminue au fur et à mesure que l'on passe de l'amont vers l'aval de la chambre de combustion. L'amont et l'aval sont définis par rapport au sens de circulation des gaz en fonctionnement normal de la chambre de combustion 1, c'est-à-dire depuis les injecteurs de combustible et comburant vers l'ouverture de la chambre de combustion et le divergent 80.

Par exemple, le plus en amont, cette distance est égale à la hauteur de l'ailette 20 diminuée d'une distance minimale correspondant à la profondeur de la soudure 31 dans l'ailette 20, c'est-à-dire que l'ailette 20 est réalisée entièrement en premier alliage sauf dans sa partie la plus externe dans laquelle est réalisée la soudure 31. Cette distance devient nulle le plus en aval, c'est-à-dire que l'ailette est réalisée entièrement en deuxième alliage.

Ainsi, le long de la chambre de combustion 1, la conduction thermique réalisée au moyen des ailettes 20 est maximale en amont et est minimale en aval, puisque le premier alliage présente une conduction thermique qui est supérieure à celle du deuxième alliage. Le refroidissement de la paroi interne 10 est donc minimal en aval de la chambre de combustion 1, ce qui permet d'éviter ou de minimiser la formation d'eau liquide à l'intérieur de la partie aval de la chambre de combustion, là où le flux thermique venant des gaz de combustion est le plus faible du fait de la chute de pression dans la partie divergente de la chambre de combustion. En effet, dans l'état antérieur, pour certaines chambres de combustion, la température paroi pouvait être inférieure à la température ambiante et ainsi la couche limite des gaz de combustion (gaz qui sont essentiellement de la vapeur d'eau dans le cas de combustion oxygène / hydrogène) pouvait devenir de l'eau liquide, ce qui pouvait poser des problèmes pour le fonctionnement du divergent 80.

L'invention concerne également un procédé pour la réalisation d'une chambre de combustion telle que décrite ci-dessus.

Dans un premier exemple, ce procédé comprend les étapes suivantes :
(a) On réalise, soit par un procédé de dépôt, soit par un procédé traditionnel de forgeage et d'usinage, une ébauche contenant la paroi interne 10 ainsi que la partie proximale 22 des ailettes 20. Cette ébauche est constituée du premier alliage,
(b) On dépose sur l'extrémité radialement externe de chacune des parties proximales 22 un matériau de façon à former la partie médiane 25 de chacune desdites ailettes 20, la composition du matériau variant graduellement avec la distance radiale à l'axe longitudinal A depuis 100% de premier alliage au niveau de l'interface entre la partie proximale 22 et la partie médiane 25 à 100% d'un second alliage au niveau de l'extrémité radialement externe de la partie médiane 25, ce second alliage étant un alliage distinct du premier alliage,
(c) On dépose du second alliage sur l'extrémité radialement externe de chacune des parties médianes 25 de façon à former la partie distale 28 de chacune des ailettes 20,
(d) On entoure la paroi interne longitudinale 10 et les ailettes 20 par une coque externe 30 réalisée en un troisième alliage distinct du premier alliage, le second alliage présentant une soudabilité avec le troisième alliage qui est supérieure à la soudabilité du premier alliage avec ce troisième alliage et/ou une résistance mécanique qui est supérieure à celle du premier alliage.
(e) La coque externe 30, qui peut avantageusement être constituée de deux demi-coques ou de plusieurs parties distinctes, est ensuite soudée par transparence au sommet des ailettes 20 par un procédé de soudage qui peut être par exemple du soudage laser ou faisceau d'électron. Les différentes parties de la coque externe 30 sont assemblées par soudage également pendant la même opération et avec le même procédé de soudage, ou dans une étape séparée avec éventuellement un autre procédé de soudage (TIG par exemple).

Par exemple, aux étapes (a), (b) et (c), on effectue le dépôt par projection de poudre. Il peut s'agir d'une projection thermique, à plasma ou à flamme, d'une projection à froid (généralement connu sous l'appellation « Cold Gaz Spraying ») ou encore d'un dépôt laser (généralement connu sous l'appellation « Laser Metal Déposition »). Ainsi, la réalisation de la partie médiane 25 est facilitée puisqu'il suffit d'augmenter la proportion de deuxième alliage par rapport au premier alliage au fur et à mesure que l'on réalise cette partie médiane 25. Ainsi, la proportion de deuxième alliage augmente progressivement de 0% au début de la projection pour réaliser la partie médiane 25 à 100% à la fin de cette projection, la proportion de premier alliage diminuant en parallèle de 100% à 0%.

Pour réaliser la partie proximale 22 on dépose uniquement de la poudre de premier alliage, et pour réaliser la partie distale 28 on dépose uniquement de la poudre de deuxième alliage.

Dans un deuxième exemple, le procédé comprend les étapes suivantes :
(a) On réalise, soit par un procédé de dépôt, soit par un procédé traditionnel de forgeage et d'usinage, une ébauche axisymétrique comprenant la paroi interne 10 ainsi qu'une deuxième portion coaxiale continue et axisymétrique possédant une hauteur correspond à la hauteur désirée pour la partie proximale 22 des ailettes 20. Cette ébauche est constituée du premier alliage,
(b) On dépose sur la surface externe de la deuxième portion une couche d'un matériau de façon à former une troisième portion coaxiale continue et axisymétrique possédant une hauteur correspondant à la hauteur désirée pour la partie médiane 25 des ailettes 20, la composition du matériau variant graduellement avec la distance radiale à l'axe longitudinal A depuis 100% de premier alliage au niveau de l'interface entre la deuxième couche 22 et la troisième couche 25 à 100% d'un second alliage au niveau de la surface externe de la troisième portion 25, ce second alliage étant un alliage distinct du premier alliage,
(c) On dépose une couche de second alliage sur la surface externe de la troisième portion de façon à former une quatrième portion coaxiale continue et axisymétrique possédant une hauteur correspondant à la hauteur désirée pour la partie médiane 25 des ailettes 20,
(d) On usine des canaux 40 dans les deuxième, troisième et quatrième portions de manière à former les ailettes 20,
(e) On entoure la paroi interne longitudinale 10 et les ailettes 20 par une coque externe 30 réalisée en un troisième alliage distinct du premier alliage, le second alliage présentant une soudabilité avec le troisième alliage qui est supérieure à la soudabilité du premier alliage avec ce troisième alliage et/ou une résistance mécanique qui est supérieure à celle du premier alliage.
(f) La coque externe 30, qui peut avantageusement être constituée de deux demi-coques ou de plusieurs parties distinctes, est ensuite soudée par transparence au sommet des ailettes 20 par un procédé de soudage qui peut être par exemple du soudage laser ou faisceau d'électron. Les différentes parties de la coque externe 30 sont assemblées par soudage également pendant la même opération et avec le même procédé de soudage, ou dans une étape séparée avec éventuellement un autre procédé de soudage (TIG par exemple).

## Revendications

1. Chambre de combustion (1) de moteur fusée s'étendant selon un axe longitudinal A et comprenant une enveloppe longitudinale, cette enveloppe longitudinale comportant
une paroi interne longitudinale (10) en un premier alliage qui est un alliage de cuivre et qui se prolonge sur sa face radialement externe (15) par une pluralité d'ailettes (20) s'étendant radialement vers l'extérieur, chacune desdites ailettes présentant une partie proximale (22), une partie médiane (25), et une partie distale (28), et
une coque externe (30) entourant ladite paroi interne longitudinale (10) et lesdites ailettes (20), ladite coque (30) étant réalisée en un troisième alliage distinct du premier alliage,
dans lequel ladite partie proximale (22) d'au moins une ailette (20) est réalisée en ledit premier alliage et ladite partie distale (28) de ladite ailette (20) est réalisée en un second alliage qui est un alliage distinct du premier alliage, ladite partie médiane (25) de ladite ailette (20) entre ladite partie proximale (22) et ladite partie distale (28) présentant une composition qui varie graduellement avec la distance radiale audit axe longitudinal A depuis 100% de premier alliage au niveau de l'interface entre ladite partie proximale (22) et ladite partie médiane (25) à 100% de second alliage au niveau de l'interface entre ladite partie médiane (25) et ladite partie distale (28), ledit second alliage présentant une soudabilité avec ledit troisième alliage qui est supérieure à la soudabilité dudit premier alliage avec ce troisième alliage et/ou une résistance mécanique qui est supérieure à celle dudit premier alliage.

2. Chambre de combustion (1) selon la revendication 1 **caractérisée en ce que** ledit second alliage et ledit troisième alliage sont identiques.

3. Chambre de combustion (1) selon la revendication 1 ou 2 **caractérisée en ce que** ledit second alliage est un alliage de nickel.

4. Chambre de combustion (1) de moteur fusée selon l'une quelconque des revendications 1 à 3 **caractérisée en ce que** ladite coque (30) est soudée sur les extrémités (29) des parties distales (28) desdites ailettes (20) de telle sorte que chaque espace entre deux ailettes (20) adjacentes quelconques forme un canal (40) fermé.

5. Chambre de combustion (1) de moteur fusée selon l'une quelconque des revendications 1 à 3 **caractérisée en ce qu'**il existe un espace entre les extrémités (29) des parties distales (28) desdites ailettes (20) et ladite coque (30) de telle sorte que les espaces entre lesdites ailettes (20) forment des canaux (40) ouverts.

6. Chambre de combustion (1) de moteur fusée selon la revendication 5 **caractérisée en ce que** ladite coque (30) est fixée sur un composant de ladite chambre de combustion (1) à au moins une de ses extrémités longitudinales.

7. Chambre de combustion (1) de moteur fusée selon l'une quelconque des revendications 1 à 6 **caractérisée en ce que** pour chacune desdites ailettes (20), la distance radiale de ladite partie médiane 25 à la base (21) de ladite ailette (20) dans un plan transversal P de ladite ailette (20) varie en fonction de la position longitudinale de ce plan P le long de ladite chambre de combustion (1).

8. Procédé de fabrication d'une chambre de combustion (1) de moteur fusée s'étendant selon un axe longitudinal A et comprenant une enveloppe longitudinale, cette enveloppe longitudinale comportant
une paroi interne longitudinale (10) en un premier alliage qui est un alliage de cuivre,
une pluralité d'ailettes (20) s'étendant radialement vers l'extérieur depuis la face radialement externe (15) de la paroi interne longitudinale (10), chacune desdites ailettes présentant une partie proximale (22), une partie médiane (25), et une partie distale (28), et
une coque externe (30) entourant ladite paroi interne longitudinale (10) et lesdites ailettes (20), ladite coque (30) étant réalisée en un troisième alliage distinct du premier alliage,
ledit procédé comportant les étapes suivantes :
on réalise une ébauche en premier alliage comprenant une première portion incluant au moins la paroi interne longitudinale (10) et une deuxième portion incluant au moins la partie proximale (22) de chacune des ailettes (20),
on dépose sur au moins certaines zones de la surface radialement externe de la deuxième portion (22) un matériau de façon à former une troisième portion incluant au moins la partie médiane (25) de chacune desdites ailettes (20), la composition dudit matériau variant graduellement avec la distance radiale audit axe longitudinal A depuis 100% de premier alliage au niveau de l'interface entre ladite deuxième portion (22) et ladite troisième portion (25) à 100% d'un second alliage au niveau de l'extrémité radialement externe de ladite troisième portion (25), ce second alliage étant un alliage distinct dudit premier alliage,
on dépose dudit second alliage sur au moins certaines zones de la surface radialement externe de la troisième portion (25) de façon à former une quatrième portion incluant au moins la partie distale (28) de chacune desdites ailettes (20),
on entoure ladite quatrième portion (28) avec ladite coque (30) réalisée en troisième alliage, ledit second alliage présentant une soudabilité avec ledit troisième alliage qui est supérieure à la soudabilité dudit premier alliage avec ce troisième alliage et/ou une résistance mécanique qui est supérieure à celle dudit premier alliage.

9. Procédé de fabrication selon la revendication 8, dans lequel la coque (30) est ensuite soudée par transparence au sommet des ailettes (20).

## Patentansprüche

1. Brennkammer (1) eines Raketenmotors, die sich entlang einer Längsachse A erstreckt und einen länglichen Mantel aufweist, wobei dieser längliche Mantel umfasst:
eine Längsinnenwand (10) aus einer ersten Legierung, die eine Kupferlegierung ist und die an ihrer radial äußeren Fläche (15) durch eine Mehrzahl von sich radial nach außen erstreckenden Rippen (20) verlängert ist, wobei jede der Rippen einen proximalen Abschnitt (22), einen mittleren Abschnitt (25) und einen distalen Abschnitt (28) aufweist, und
eine äußere Hülle (30), die die Längsinnenwand (10) und die Rippen (20) umgibt, wobei die Hülle (30) aus einer dritten Legierung hergestellt ist, die sich von der ersten Legierung unterscheidet,
wobei der proximale Abschnitt (22) mindestens einer Rippe (20) aus der ersten Legierung und der distale Abschnitt (28) dieser Rippe (20) aus einer zweiten Legierung hergestellt ist, die eine von der ersten Legierung verschiedene Legierung ist, wobei der mittlere Abschnitt (25) der Rippe (20) zwischen dem proximalen Abschnitt (22) und dem distalen Abschnitt (28) eine Zusammensetzung aufweist, die sich allmählich mit dem radialen Abstand zur Längsachse A von 100 % erster Legierung an der Grenzfläche zwischen dem proximalen Abschnitt (22) und dem mittleren Abschnitt (25) zu 100 % zweiter Legierung an der Grenzfläche zwischen dem mittleren Abschnitt (25) und dem distalen Abschnitt (28) ändert, wobei die zweite Legierung eine Schweißbarkeit mit der dritten Legierung aufweist, die höher ist als die Schweißbarkeit der ersten Legierung mit der dritten Legierung und/oder eine mechanische Festigkeit, die höher ist als die der ersten Legierung.

2. Brennkammer (1) nach Anspruch 1, **dadurch gekennzeichnet, dass** die zweite Legierung und die dritte Legierung identisch sind.

3. Brennkammer (1) nach Anspruch 1 oder 2, **dadurch gekennzeichnet, dass** die zweite Legierung eine Nickellegierung ist.

4. Brennkammer (1) eines Raketenmotors nach einem der Ansprüche 1 bis 3, **dadurch gekennzeichnet, dass** die Hülle (30) an die Enden (29) der distalen Abschnitte (28) der Rippen (20) so geschweißt ist, dass jeder Raum zwischen zwei beliebigen benachbarten Rippen (20) einen geschlossenen Kanal (40) bildet.

5. Brennkammer (1) eines Raketenmotors nach einem der Ansprüche 1 bis 3, **dadurch gekennzeichnet, dass** zwischen den Enden (29) der distalen Abschnitte (28) der Rippen (20) und der Hülle (30) ein Raum so vorhanden ist, dass die Räume zwischen den Rippen (20) offene Kanäle (40) bilden.

6. Brennkammer (1) eines Raketenmotors nach Anspruch 5, **dadurch gekennzeichnet, dass** die Hülle (30) an einer Komponente der Brennkammer (1) an mindestens einem ihrer Längsenden befestigt ist.

7. Brennkammer (1) eines Raketenmotors nach einem der Ansprüche 1 bis 6, **dadurch gekennzeichnet, dass** für jede der Rippen (20) der radiale Abstand von dem mittleren Abschnitt (25) zu der Basis (21) der Rippe (20) in einer Querebene P der Rippe (20) in Abhängigkeit von der Längsposition dieser Ebene P entlang der Brennkammer (1) variiert.

8. Verfahren zur Herstellung einer Brennkammer (1) eines Raketenmotors, die sich entlang einer Längsachse A erstreckt und einen länglichen Mantel aufweist, wobei dieser längliche Mantel umfasst:
eine Längsinnenwand (10) aus einer ersten Legierung, die eine Kupferlegierung ist,
eine Mehrzahl von Rippen (20), die sich von der radial äußeren Fläche (15) der Längsinnenwand (10) radial nach außen erstrecken, wobei jede der Rippen einen proximalen Abschnitt (22), einen mittleren Abschnitt (25) und einen distalen Abschnitt (28) aufweist, und
eine äußere Hülle (30), die die Längsinnenwand (10) und die Rippen (20) umgibt, wobei die Hülle (30) aus einer dritten Legierung hergestellt ist, die sich von der ersten Legierung unterscheidet,
wobei das Verfahren die folgenden Schritte umfasst:
Herstellen eines Rohlings aus einer ersten Legierung mit einem ersten Teil, der mindestens die Längsinnenwand (10) umfasst, und einem zweiten Teil, der mindestens den proximalen Abschnitt (22) jeder der Rippen (20) umfasst,
Abscheiden eines Materials auf mindestens bestimmte Bereiche der radial äußeren Oberfläche des zweiten Teils (22), um einen dritten Teil zu bilden, der mindestens den mittleren Abschnitt (25) jeder der Rippen (20) umfasst, wobei die Zusammensetzung des Materials mit dem radialen Abstand zur Längsachse A allmählich von 100 % erster Legierung an der Grenzfläche zwischen dem zweiten Teil (22) und dem dritten Teil (25) bis 100 % zweiter Legierung am radial äußeren Ende des dritten Teils (25) variiert, wobei diese zweite Legierung eine von der ersten Legierung verschiedene Legierung ist,
Abscheiden der zweiten Legierung auf mindestens bestimmte Bereiche der radial äußeren Oberfläche des dritten Teils (25), um einen vierten Teil zu bilden, der mindestens den distalen Abschnitt (28) jeder der Rippen (20) umfasst,
Umgeben des vierten Teils (28) mit der Hülle (30) aus einer dritten Legierung, wobei die zweite Legierung eine Schweißbarkeit mit der dritten Legierung aufweist, die höher ist als die Schweißbarkeit der ersten Legierung mit der dritten Legierung und/oder eine mechanische Festigkeit, die höher ist als die der ersten Legierung.

9. Herstellungsverfahren nach Anspruch 8, wobei die Hülle (30) anschließend transparent an die Oberseite der Rippen (20) geschweißt wird.

## Claims

1. A rocket engine combustion chamber (1) extending along a longitudinal axis A and comprising a longitudinal envelope, the longitudinal envelope comprising:
an inner longitudinal wall (10) made of a first alloy, which is a copper alloy, and that is extended over its radially outer face (15) by a plurality of fins (20) extending radially outwards, each of said fins presenting a proximal portion (22), a middle portion (25), and a distal portion (28); and
an outer shell (30) surrounding that said longitudinal inner wall (10) and said fins (20), said shell (30) being made of a third alloy distinct from the first alloy;
wherein said proximal portion (22) of at least one fin (20) is made of said first alloy, and said distal portion (28) of said fin (20) is made of a second alloy that is an alloy distinct from the first alloy, said middle portion (25) of said fin (20) between said proximal portion (22) and said distal portion (28) presenting a composition that varies gradually with radial distance from said longitudinal axis A from 100% of first alloy at the interface between said proximal portion (22) and said middle portion (25), to 100% of second alloy at the interface between said middle portion (25) and said distal portion (28), said second alloy presenting weldability with said third alloy that is greater than the weldability of said first alloy with the third alloy, and/or presenting mechanical strength that is greater than the mechanical strength of said first alloy.

2. A combustion chamber (1) according to claim 1, **characterized in that** said second alloy and said third alloy are identical.

3. A combustion chamber (1) according to claim 1 or claim 2, **characterized in that** said second alloy is a nickel alloy.

4. A rocket engine combustion chamber (1) according to any one of claims 1 to 3, **characterized in that** said shell (30) is welded to the ends (29) of the distal portions (28) of said fins (20) in such a manner that each gap between any two adjacent fins (20) forms a closed channel (40).

5. A rocket engine combustion chamber (1) according to any one of claims 1 to 3, **characterized in that** gaps exist between the ends (29) of the distal portions (28) of said fins (20) and said shell (30) in such a manner that the gaps between said fins (20) form open channels (40) .

6. A rocket engine combustion chamber (1) according to claim 5, **characterized in that** said shell (30) is fastened on a component of said combustion chamber (1) at at least one of its longitudinal ends.

7. A rocket engine combustion chamber (1) according to any one of claims 1 to 6, **characterized in that** for each of said fins (20), the radial distance of said middle portion 25 to the base (21) of said fin (20) in a transverse plane P of said fin (20) varies as a function of the longitudinal position of the plane P along said combustion chamber (1).

8. A fabrication method for fabricating a rocket engine combustion chamber (1) extending along a longitudinal axis A and comprising a longitudinal envelope, the longitudinal envelope comprising:
a longitudinal inner wall (10) made of a first alloy, which is a copper alloy;
a plurality of fins (20) extending radially outwards from the radially outer face (15) of the longitudinal inner wall (10), each of said fins presenting a proximal portion (22), a middle portion (25), and a distal portion (28); and
an outer shell (30) surrounding that said longitudinal inner wall (10) and said fins (20), said shell (30) being made of a third alloy distinct from the first alloy;
said method comprising the following steps:
making a blank out of the first alloy, the blank comprising a first portion including at least the longitudinal inner wall (10) and a second portion including at least the proximal portion (22) of each of the fins (20);
depositing a material on at least some zones of the radially outer surface of the second portion (22) in such a manner as to form a third portion including at least the middle portion (25) of each of said fins (20), the composition of said material varying gradually with radial distance from said longitudinal axis A from 100% first alloy at the interface between said second portion (22) and said third portion (25) to 100% of a second alloy at the radially outer end of said third portion (25), the second alloy being an alloy distinct from said first alloy;
depositing said second alloy on at least some zones of the radially outer surface of the third portion (25) so as to form a fourth portion including at least said distal portion (28) of each of said fins (20); and
surrounding said fourth portion (28) with said shell (30) made of the third alloy, said second alloy presenting weldability with said third alloy that is greater than the weldability of said first alloy with the third alloy, and/or presenting mechanical strength that is greater than the mechanical strength of said first alloy.

9. A fabrication method according to claim 8, wherein the channel (30) is then welded by transparency to the tops of the fins (20).
